# EUROPEAN PATENT SPECIFICATION

(11) **EP 3 658 717 B1**
(45) Date of publication and mention of the grant of the patent: **02.06.2021**
(21) Application number: 18748855.6
(22) Date of filing: 23.07.2018
(51) Int. Cl.: F16B 35/00, E03D 11/14, E03C 1/322, F16B 2/04, F16B 37/14, F16B 41/00

(54) **EXPANSIBLE SLEEVE FOR FACILITATING THE INSTALLATION OF WALL-HUNG OBJECTS, KIT COMPRISING SAID SLEEVE AND RELATED METHOD**
SPREIZHÜLSE ZUR ERLEICHTERUNG DER MONTAGE VON WANDGEHÄNGTEN GEGENSTÄNDEN, KIT MIT DIESER HÜLSE UND ZUGEHÖRIGES VERFAHREN
MANCHON EXPANSIBLE POUR FACILITER L'INSTALLATION D'OBJETS SUSPENDUS À UN MUR, KIT COMPRENANT LEDIT MANCHON ET PROCÉDÉ ASSOCIÉ

(30) Priority: 25.07.2017 IT 201700084546; 16.07.2018 IT 201800007219
(43) Date of publication of application: 03.06.2020
(73) Proprietor: Sanitea S.R.L., 05100 Terni (IT)
(72) Inventor: CUCCINIELLO, Daniele, 01033 Civita Castellana (VT) (IT)
(74) Representative: Mannucci, Michele
(86) International application number: PCT/EP2018/025201
(87) International publication number: WO 2019/020216

(56) References cited:
- EP-A2- 2 653 769
- WO-A1-2012/028201
- DE-A1-102013 112 005
- DE-U1-202009 014 171
- US-A- 2 993 950
- US-A1- 2010 247 270
- US-A1- 2015 152 906

## Description

### TECHNICAL FIELD

The present invention relates to systems for fixi ng objects that shall be hung to beari ng structures, for instance to a wall, in particular systems for fixing wall-hung bathroom fixtures. More specifically, embodiments disclosed herein relate to kits comprising a sleeve to be positioned before mounting the bathroom fixture and able to adapt to the di mension of a niche provided in the bathroom fixture.

The invention also relates to a method for mounting wall-hung bathroom fixtures or other objects to be hung to a bearing structure.

### BACKGROUND ART

Forwall-mounting of wall-hung bathroom fixtures, specific brackets shall be positioned in the wall, which are designed according to UNI standards and are requi red for positioning and anchoring the bathroom fixtures. The brackets end with threaded bars, allowing interaction with the various fixing systems.

The fixing systems are constituted by several modular elements.

One of these elements is a pin made of steel, which shall be applied to the threaded bars mentioned above. Once this connection has been done, the bathroom fixture can be anchored by means of the fixing system. EP2857604 A1, DE202009014171 U1, DE201310112005 A1, EP1338711 A1, EP2847393 A1 descri be various fixi ng systems.

For the anchoring, the first thing to do is to position a system element in a specific area of the bathroom fixture and then to make it interact with a pin made of steel.

T his system element is a sort of plastic sleeve, the inner diameter whereof is almost equal to the diameter of the steel pin. This positioning procedure is done before the mounting, as these operations are typically characterized by low or null visibility. The operator shall therefore be sure that all the elements are positioned in the right way in the specific areas, so as to perform this operation.

T he area of the bathroom fixture where the plastic sleeve shall be positioned is constituted by a niche, whose shape is not standardized. The niche is accessible from the bottom and is in communication with the anchoring wall through a hole. The steel pi n passes through this hole so as to interact with the rest of the fixi ng system.

The plastic sleeve shall therefore remain in a fixed position inside the niche, against the action of gravity so that the hole of the niche and the hole of the sleeve are coaxial with each other.

This need is satisfied, according to the prior art, through different methods, disclosed in the above-mentioned documents.

E P2857604 discloses a system comprising a sleeve, on the upper surface of which plastic brushes or, alternatively, a spongy pad are provided, so that the height of the overall element is greater than the length of the niche. The brushes allow positioning the sleeve inside the niche through interference, so that the sleeve remains in the position chosen by the operator. Obviously, in order to operate, this system shall contrast two walls of the niche. This known system has some disadvantages as, during the storing step, damages can occur to the plastic/spongy elements. This drawback can result in problems during the mounti ng step, as the system does not ensure interference between sleeve and walls of the niche.

DE202009014171 discloses a fixing system comprising a sleeve and an innovative element shaped like a hollow truncated cone. An end of the element shaped like a hollow truncated cone is constituted by an enlargement so that the diameter thereof is slightly greater than the greater diameter of the truncated cone. The other end is constituted by a thread whose nominal diameter is equal to the lower diameter of the truncated cone. The sleeve has a correspondi ng thread allowing the coupling between truncated-conical element and sleeve. Once the sleeve has been positioned inside the niche of the bathroom fixture to be wall-hung, from the side of the rear surface of the bathroom fixture, the truncated cone is inserted into the hole in communication with the niche so that the two elements can be coupled. The end part with the enlargement has a diameter greater than the diameter of the hole and it will be therefore possible to realize an integral fixed coupling in correspondence of the hole.

DE201310112005 discloses a fixing system constituted by sleeve and truncated cone. The difference with respect to the system described above is only the different method for coupling the sleeve and the truncated cone, as in this case it uses a toothing.

EP1338711 A1 discloses a system where, on an end of the sleeve, positioning wings are provided whose length is equal to the length of the hole provided on the bathroom fixture in question. the wings are made of a deformable plastic. The sleeve is positioned in the niche and the operator shall deform these elements so that they can be inserted into the hole. When not deformed, the wings do not allow the insertion into the hole, as, if we imagine a circle circumscribed to the wings, it has a greater diameter than the diameter of the hole. A small projection is provided on the end of each wing. The projections allow gripping the rear surface of the bathroom fixture. Installation difficulties will occur when the small dimensions of the niche do not allow the insertion of the positioning wings inside the hole. Further problems can occur in case the length of the hole is lower than the length of the positioning wings: in this case the system will be poor and does not ensure immobility between sleeve and bathroom fixture.

EP2847393 A1 discloses a fixing system providing for accessing the niche for positioning the sleeve from the rear surface of the bathroom fixture. On the sleeve, projections are provided, and the hole allowing accessing the niche has such a shape to allow the entrance of this latter. Once the sleeve has been inserted inside the niche and by rotating it by a given angle, it will grip the adjacent areas of the bathroom fixture. The relative position of the sleeve with respect to the hole, in the instant following the rotation, prevents the removal thereof. This system requires, to allow an adequate positioning, small tolerances for realizing the niche.

WO-A-2012/028201 discloses a water tank installation system for installing a water tank on a toilet bowl, not adapted to hang wall-hung objects. The installation system disclosed in WO-A-2012/028201 comprises a guide bolt, which is fastened to the toilet bowl and which comprises a hole extending through the bolt. A fastening element secures the bolt. The installation system comprises an installation element comprising a large diameter socket and a small diameter socket. The installation element is screwed to guide bolt through its large diameter socket. Passing through a hole on the water tank and a slot, a bolt is screwed into the small diameter socket of the element. The installation system ensures that the water tank is uninstalled from and installed to the toilet bowl without removing the toilet bowl from where it is installed.

It is necessary to realize a system for mounting bathroom fixtures or other wall-hung objects, which overcome, completely or at least partially, the prior art drawbacks.

In particular, it will be useful to have available a mounting system provided with a sleeve that can be adapted efficiently to different shapes and/or dimensions of the mounting seats or niches provided inside the object to be hung. It would be also useful to have available a mounting system that can be easily removed from the wall-hung object. It would be also useful to have available a fixing system wherein the sleeve does not require anchoring elements projecting from the rear surface of the object to be hung.

### SUMMARY OF THE INVENTION

According to a first aspect, a kit for mounting wall-hung objects, in particular wall-hung bathroom fixtures, according to claim 1 is disclosed. The kit comprises an expansible sleeve. The expansible sleeve comprises a first element with a through axial cavity and a second element that can coaxially engage the first element. The first element and the second element can be connected together by means of a screw coupling having a first thread at a first end of the first element and a second thread on the second element. The two threads can be mutually engaged and the screw coupling is so configured that, when the first thread and the second thread engage each other, the reciprocal rotation between the first element and the second element causes a change in the axial length of the sleeve. This allows adapting the sleeve to the variable sizes of a seat or niche housing the sleeve, provided in the object to be hung. The second element of the sleeve comprises a connection means configured and arranged to be engaged by means of a maneuvering tool through the through axial cavity of the first element of the sleeve. Through the maneuvering tool, the second element can be rotated with respect to the first element so as to cause an adjustment in the axial length of the sleeve.

In some embodiments, the kit also comprises an anchoring pin, which can be introduced into the through axial cavity of the sleeve. The anchoring pin can be introduced into the through axial cavity from an end of the first element opposite to the second element.

In some embodiments, the first element of the sleeve comprises a substantially radial through hole, i.e. transverse with respect to the through axial cavity, and a constraint member, for example a screw, that can be inserted in said through hole. The through hole is advantageously threaded to allow screwing the screw to the sleeve. The screw, or other suitable constraint member, can be introduced into the sleeve through the radial hole until it projects in the through axial cavity of the sleeve. In this way, during mounting the constraint member can co-act with an anchoring pin introduced into the axial cavity of the sleeve and generate a thrust resulting in the object to be hung resting by pressure against the bearing structure. To this end, the anchoring pin may comprise a flaring elongated according to an axial direction of the anchoring pin and of the sleeve. The constraint member co-acts with an inclined surface of the flaring to generate a traction force onto the anchoring pin.

According to a further aspect, the invention also provides for a system comprising an object to be hung, in particular a bathroom fixture, and at least a kit as described above. The kit may comprise a single sleeve, or more sleeves, for example two sleeves, with respective elements associated thereto.

According to a further aspect, the invention relates to a method for fixing an object to be hung, in particular a bathroom fixture, to a beari ng structure, the object to be hung comprising at least one niche that can be accessed from the outside of the object and is delimited by a first wall and by a second wall that are opposite to each other, and wherein the first wall has a through opening. According to embodiments descri bed herein, the method comprises the following steps:
inserting, into the niche, a sleeve of the kit described above, so that the first element of the sleeve is oriented towards the fi rst wall of the object to be hung and the second element of the sleeve is directed towards the second wall of the object to be hung,
aligning the through axial cavity of the sleeve with the through opening of the first wall of the object to be hung;
i nserti ng a maneuveri ng tool through the through openi ng of the fi rst wall and through the through axial cavity of the sleeve, up to engage the second element of the sleeve with the maneuvering tool;
through said maneuvering tool, rotating the second element of the sleeve with respect to the fi rst element of the sleeve, so as axial ly to elongate the sleeve up to lock it in the niche by interference.

Further advantageous characteristics and embodiments of the kit, of the system, and of the method according to the present invention are described hereunder with reference to the attached drawings and in the appended claims, which form an integral part of the present description.

### BRIEF DESCRIPTION OF THE DRAWINGS

The i nventi on shall be better understood by following the description and the accompanying drawing, which show a non-limiting example of embodiment of the invention. More in particular, in the drawing:
Fig.1 is an exploded view of a sleeve in a first embodiment, in combination with a maneuvering tool;
Figs.2 and 3 show longitudinal cross sections, according to II-II of Fig.1, of respectively a first element and a second element of the sleeve of Fig.1;
Fig.4 is an axonometric view of the sleeve of Fig.1 assembled with the maneuveri ng tool extracted;
Fig.5 is an axonometric view analogous to that of Fig.4, with the maneuvering tool inserted into the sleeve;
Figs.6A to 6I are sequences for mounting a bathroom fixture using a kit comprising the sleeve and the tool of Figs. 1 to 5;
Fig.7 is an exploded view of a sleeve in a second embodi ment, in combi nation with a maneuvering tool;
Figs.8 and 9 show longitudinal cross sections of respectively a first element and a second element of the sleeve of Fig.7;
Fig.10 is an axonometric view of the sleeve of Fig.7 assembled with the maneuveri ng tool extracted;
Fig.11 is an axonometric view analogous to that of Fig.10, with the maneuveri ng tool inserted into the sleeve;
Fig.12 is an exploded view of a sleeve in a third embodiment, in combination with a maneuvering tool;
Figs.13 and 14 show longitudinal cross sections of respectively a first element and a second element of the sleeve of Fig.12;
Fig.15 is an axonometric view of the sleeve of Fig.12 assembled with the maneuveri ng tool extracted;
Fig.16 is an axonometric view analogous to that of Fig.1, with the maneuveri ng tool inserted into the sleeve.

### DETAILED DESCRIPTION OF EMBODIMENTS

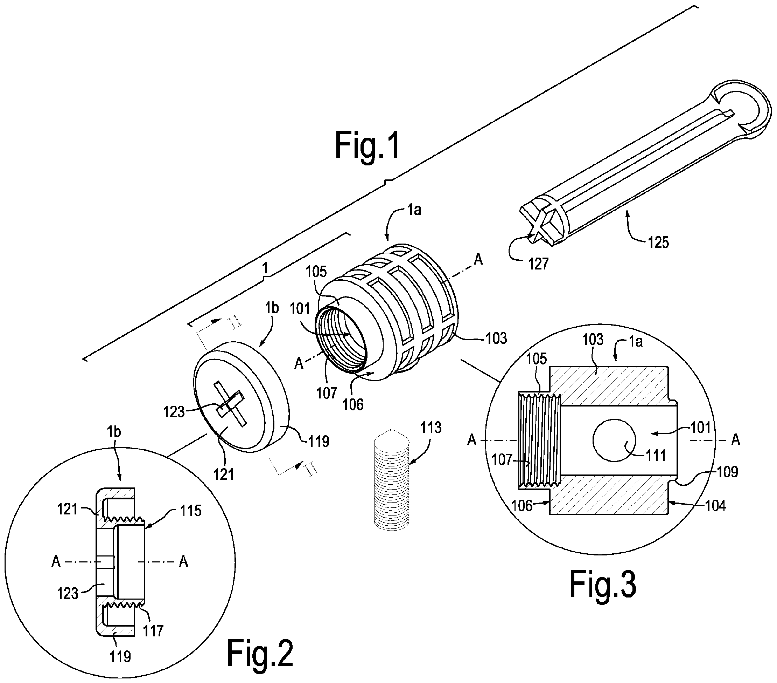

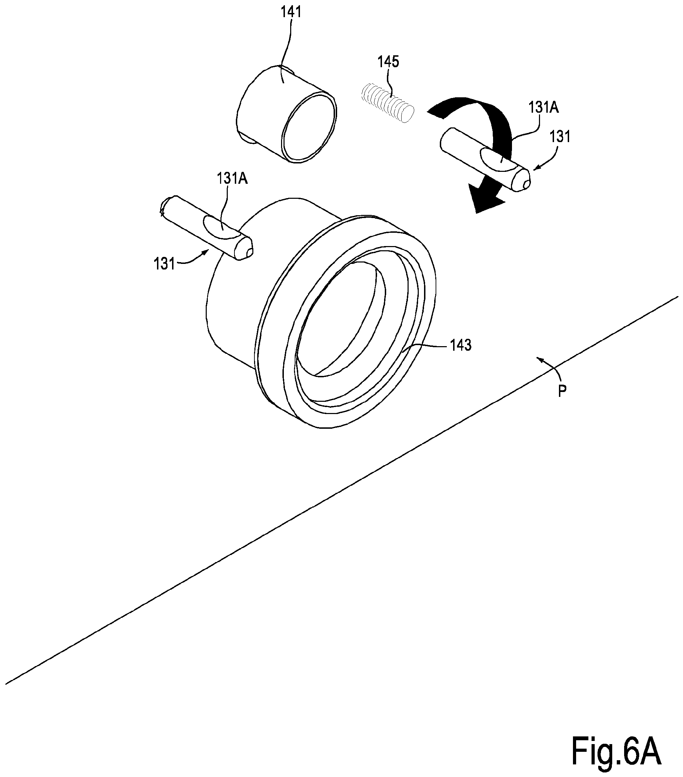

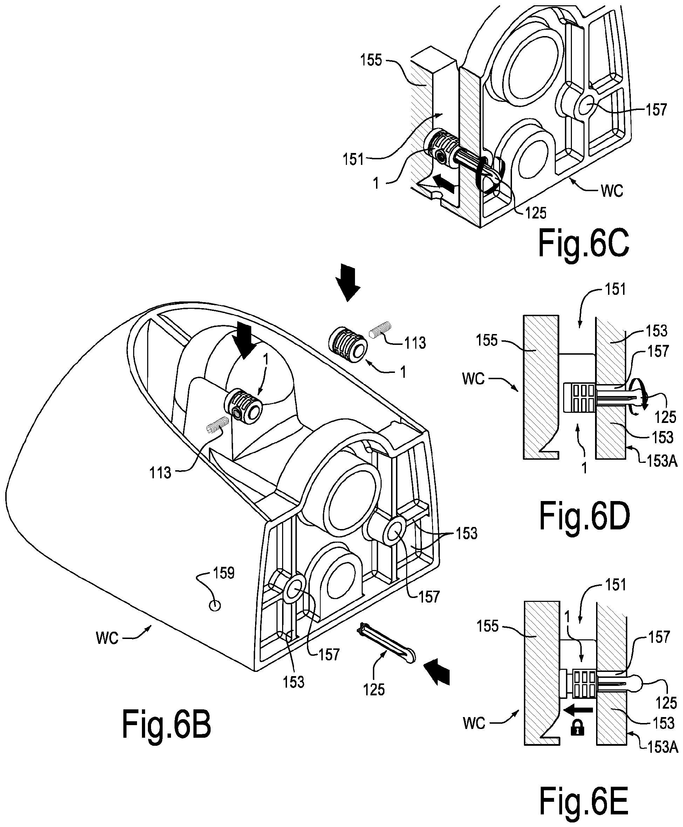

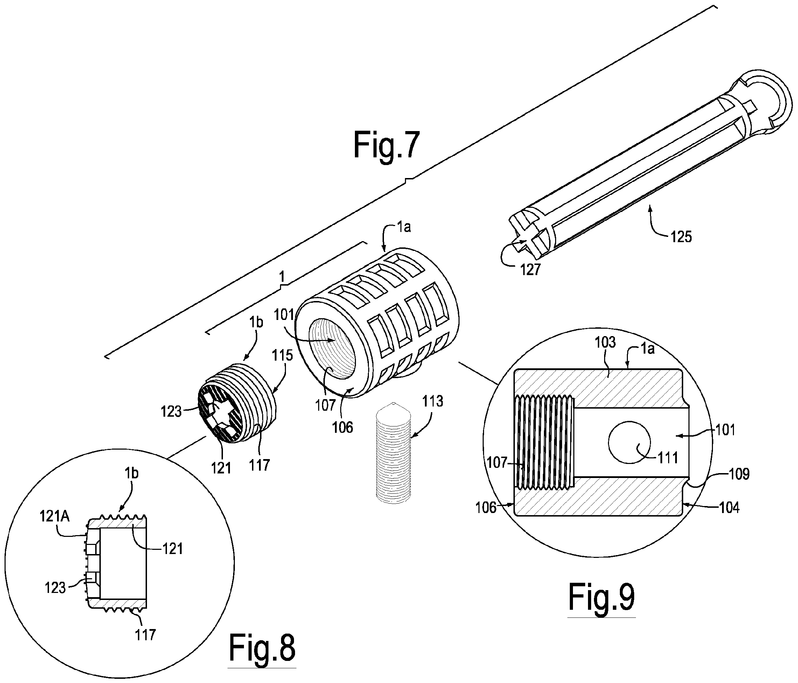

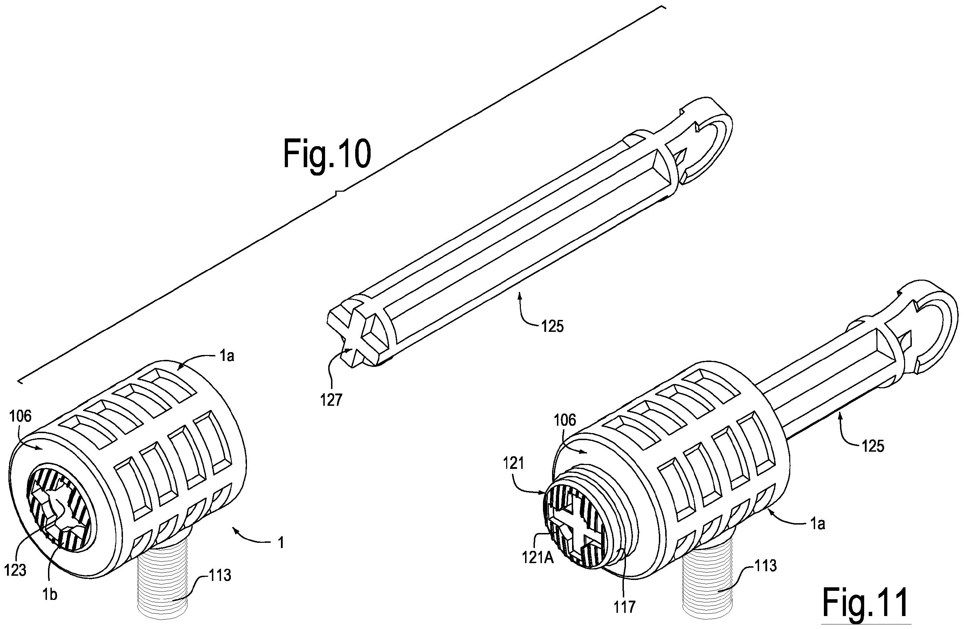

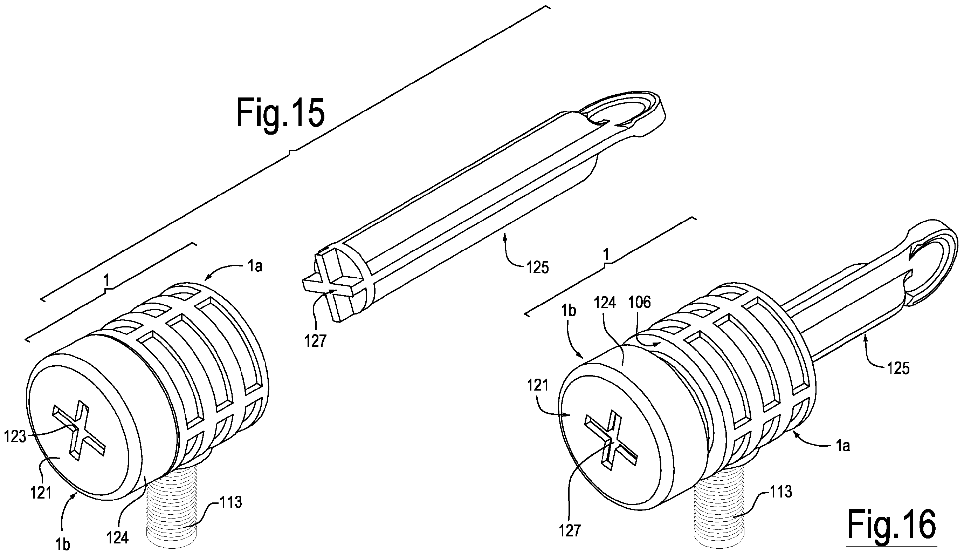

A first embodiment of a kit comprising a sleeve for mounting a hung object, especially a wall-hung bathroom fixture (a bidet or a WC) is shown in Figs.1 to 5. Figs. 6A-6I show the operations for mounti ng a bathroom fixture by using the kit comprisi ng the sleeve of Figs.1 to 5. Figs.6A-6I also illustrate the modes of using the mounting kits comprising the sleeves according to the other embodiments described below with reference to Figs. 7 to 16.

With initial reference to Figs. 1 to 5, a kit is provided for mounting a wall-hung bathroom fixture, the kit comprising an expansible sleeve 1. The sleeve 1 comprises a first element 1a and a second element 1b. In the embodiments illustrated in Figs. 1 to 5, the first element 1a has a through axial cavity 101 extending from one to the other of two axial ly opposite ends of the element 1a.

In some embodiments, the fi rst element 1a comprises a first hollow body 103 and a second hollow body 105 that are substantially coaxial with each other, i.e. having a common longitudinal axis A-A. The two hollow bodies 103 and 105 can be made in a single piece, for example made of molded plastic. However, other materials can be also used, for instance metals. The two hollow bodies 103, 105 may be realized also as separate components, subsequently assembled together.

The through axial cavity 101 extends through both the hollow bodies 103, 105 and can have a substantially constant diameter, i.e. a diameter equal in both the hollow bodies 103, 105. In practical embodiments, the first hollow body 103 has two end surfaces 104 and 106. The second hollow body 105 extends in axial direction from the end surface 106.

On the end surface 104 of the first hollow body 105, opposite to the end surface 106 from which the second body 105 extends, an annular projection, or ring, 109 is provided, which is substantially coaxial with the through axial cavity 101 for the purposes detailed below.

In some embodiments, the through axial cavity 101 is at least partially threaded. Reference 107 indicates the female thread provided on part of the longitudinal extension of the through axial cavity 101. In the illustrated embodiment, the female thread 107 extends from a distal end (i.e. opposite to the hollow body 103) of the hollow body 105, for a given depth inside the through axial cavity 101, for instance up to inside the first hollow body 103.

In the embodi ment illustrated in Figs. 1 to 5, the second hollow body 105 has a substantially cylindrical outer shape, the diameter whereof is preferably smaller than the maximum transverse dimension of the first hollow body 103.

In the embodi ment illustrated in Figs. 1 to 5 the first hollow body 103 has a generally cylindrical outer surface, or a surface that can be enveloped in a cylindrical surface, the diameter whereof is greater than the outer diameter of the second body 105.

It is also possible to provide the side outer surfaces of the hollow bodies 103, 105 with a different shape, for example giving to one or the other hollow bodies a prismatic shape.

In the embodiment illustrated in Figs. 1 to 5 the first element 1a of the sleeve 1 also has a transverse hole 111 (Fig.3) that is preferably approximately orthogonal to the axis A-A of the sleeve 1. The transverse hole 111 can be threaded in order to engage a constraint member, for example a screw 113. The screw 113 is preferably a headless screw.

T he second element 1b of the sleeve is shown in detail in Figs. 1 and 2. The second element 1b may have an outer cylindrical shape, even if this is not necessary in this embodiment. The outer diameter of the second element 1 b of the sleeve 1, if of cylindrical shape, may be substantially equal to the outer diameter of the first element 1a, but also this feature is not mandatory.

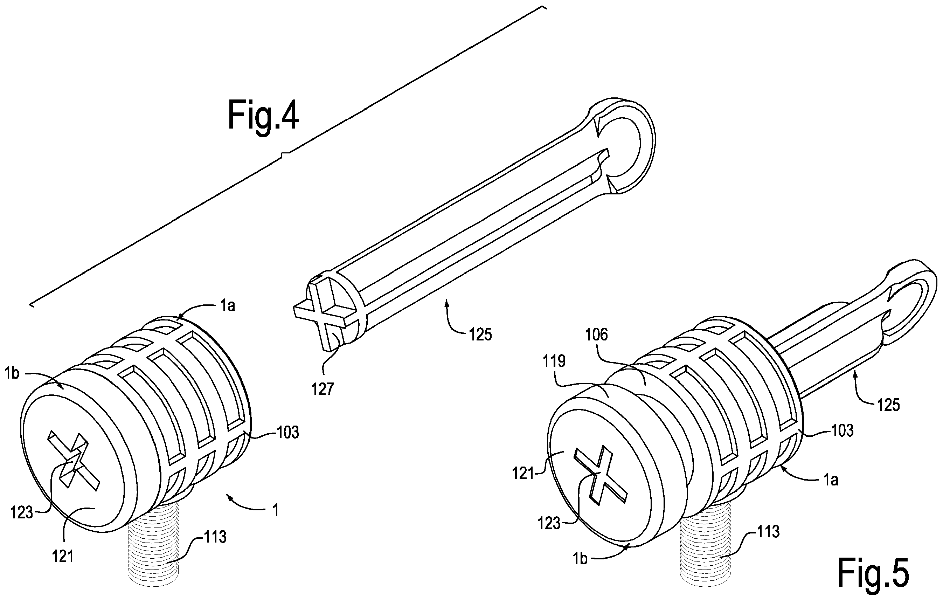

T he second element 1 b of the sleeve 1 has a porti on 115 forming a male thread 117. For example, the second element 1b may have an outer mantle 119, extending around an axis A-A that (when the sleeve 1 is assembled, as in Figs. 4 and 5) coincides with the longitudinal axis A-A of the first element 1a of the sleeve 1. The portion 115 may be in the form of a cylindrical collar inside the outer mantle 119 and coaxial with the axis A-A, and therefore with the outer mantle 119. The male thread 117 can be provided on the outer surface of the collarforming the portion 115. The collar115 and the preferably cylindrical outer mantle 119 extend from a transverse wall 121 that is preferably orthogonal to the axis A-A.

The second element 1b of the sleeve 1 has a connection means so as to be engaged by a maneuvering tool, generically indicated with number 125 in Figs. 4 and 5, for the purposes that will be detailed with reference to the sequence of Figs. 6A-6I. The connection means may be a slot or a notch provided in the transverse wall 121 of the second element 1a of the sleeve.

In the illustrated embodiment the connection means, indicated with 123, is formed by a cross-shaped notch, i.e. by two cuts approximately orthogonal to each other. Even if in the illustrated example the cross-shaped notch 123 extends through the whole thickness of the wall 121, however this is not necessary. However, this is the preferred configuration as, the thickness of the transverse wall 121 bei ng the same, a larger contact surface between the maneuvering tool 125 and the element 1b of the sleeve 1 and therefore a better transmission of torque between maneuvering tool 125 and element 1 b can be obtained.

Moreover, even if it is possible to use a notch with a simpler shape, for example a rectilinear notch, instead of a cross-shaped notch, this latter contributes to increase the contact surface with the maneuvering tool 125 and therefore to increase the torque that can be transmitted by the maneuvering tool 125 to the element 1b of the sleeve 1, thus reducing the risk of deformations of the element 1b. The maneuveri ng tool 125 has a head 127, the shape whereof is complementary to the notch 123 and which is adapted to couple torsional ly to the element 1 b of the sleeve 1, in the illustrated example a cross-shaped head 127.

The sleeve 1, the screw 113 and, in case, the tool 125 may be part of a mounting kit that can also comprise an anchoring pin for wall-anchoring, the shape and function whereof (in combination with the sleeve 1) are described below with reference to Figs. 6A-6I. In Fig. 6A-6I the anchoring pin is indicated with 131.

in Figs. 6A-6I the operati ons are shown for mounti ng a toilet WC on a wall P by using two kits, each of which comprises a sleeve 1, a screw 113 and a pin 131. The same operations may be performed for mounting other objects to be hung using the same mounting kit.

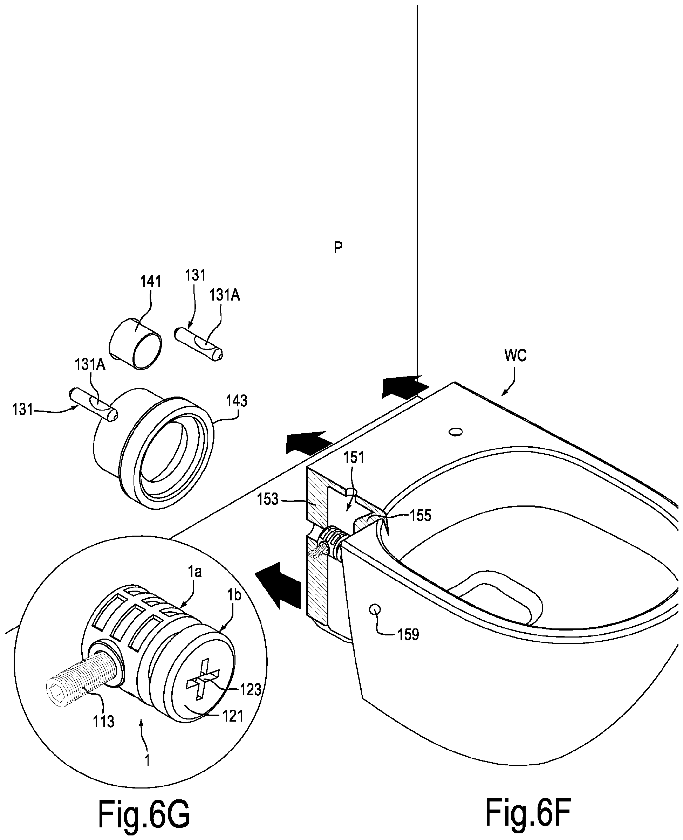

Fig.6A shows a flash pipe 141, feeding water from a tank, not shown, and a discharge pipe 143 projecting from a wall P onto which the toilet WC shall be mounted. To fix the toilet WC to the wall P two threaded bars 145 are provided, anchored to the wall, for example integral with a bracket (not visible) arranged below the coveri ng of the wall P, in a way known by those skilled in the art. Two anchoring pins 131 are screwed on the two threaded bars 145 previously cut to-measure. In Fig.6A one of the two anchoring pins 131 has been already screwed on the respective threaded bar 145, whilst the other one shall be mounted. To this end, the anchoring pins 131 have a threaded blind axial hole engaging, in screw-like fashion, the respective threaded bar 145. In Fig. 6F both the anchoring pins 131 are screwed on the respective threaded bars 145.

As shown in Figs. 6A, 6F, near the end opposite to the end that (in mounted arrangement) faces the wall P and where the respective threaded bar 145 is screwed, each anchoring pin 131 has an elongated flaring 131A, extending in the direction of the axial extension of the respective anchoring pin 131. The screw 113 co-acts with the elongated flaring 131 in the ways and for the purposes described below.

The operations for mounting the toilet WC to the wall P comprise, in addition to screwing the anchoring pins 131 on the threaded bars 145, the mounting of two sleeves 1 on the toilet WC and more in particular in two respective niches 151 provided in the materi al of the toilet WC. The ni ches 151 are accessible from the outsi de of the toilet WC, for example they can be opened downwards, when the toilet WC is fixed to the wall P, so as not to be visible. Each niche 151 is delimited by a first wall 153 and by a second wall 155. Each fi rst wall 153 may have a through openi ng 157, preferably shaped like a hole with circular cross-section, accessible from the outside of the toilet WC and ending in the niche 151. The outer surface 153A of the first wall 153 is intended to rest against the wall P where the toilet WC shall be mounted.

Figs. 6A, 6B, 6C show the steps of inserting and stopping a sleeve 1 in each niche 151 of the toilet WC. To this end, the toilet WC may be rotated with the mouth thereof facing downwards, so as to make the niches 151 easily accessible by the operator. Each sleeve 1 is inserted in the respective niche 151 with the axis A-A substantially orthogonal to the walls 153, 155, i.e. so that the axis A-A is parallel to the axis of the opening 157. The ring 109 facilitates aligning the sleeve 1 with the hole or openi ng 157.

To allow i nserti ng the sleeve 1 into the niche 151, the elements 1a and 1b are completely screwed together, so as to reduce the overall axial dimension of the sleeve 1, or they are screwed to an extent sufficient to have a dimension of the sleeve 1 in direction of the axis A-A smaller than the distance between the opposite surfaces of the walls 153 and 155.

Once the sleeve 1 has been positioned in the niche 151 so that the through axial cavity 101 thereof is aligned with the opening 157, the operator can insert the maneuvering tool 125 through the openi ng 157 and inside the through axial cavity 101 up to engage the element 1b of the sleeve 1 with the head 127 of the maneuveri ng tool 125. By rotating the element 1b of the sleeve 1 with respect to the element 1a in the direction of reciprocal unscrewing, the axial dimension of the sleeve 1 is increased until the sleeve 1 is locked in the niche 151.

This operation is performed for each of the sleeves 1 inserted in the two niches 151 of the toilet WC.

Each sleeve 1 may be suitably oriented around the axis A-A thereof before being locked in the niche 151 so that the hole 111 thereof is aligned with a through hole 159 provided in the side wall of the toilet WC. This orientation allows inserting from the outside of the toilet WC the screw 113 into the threaded hole 111 for the purposes explained below.

When both the sleeves 1 have been fixed in the niche 151 the toilet WC can be anchored to the wall P. As shown in Fig.6F, the toilet WC is rotated and brought to the position of use. The correctly oriented toilet WC is moved towards the wall P by aligning the openings 157 with the anchoring pins 131 previously screwed on the threaded bars 145. The pins are so rotated as to arrange the elongated flarings 131A directed opposite to each other. In Fig.6G an enlargement is shown of the sleeve 1 with the screw 113 partially screwed in the transverse hole 111 of the sleeve.

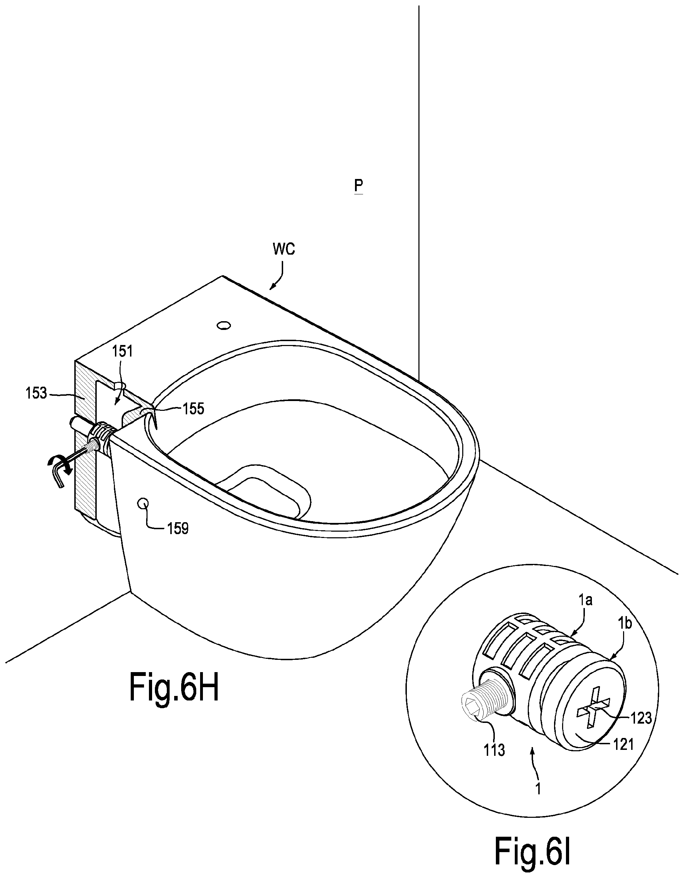

By moving the toilet WC towards the wall P, the anchoring pins 131 are inserted through the opening 157 and enter the through axial cavities 101 of the sleeves 1, as shown in Fig. 6H. Advantageously, the axial dimension of the pins 131 and/or the position thereof on the threaded bars 145 are so selected that the elongated flarings 131A are approximately in correspondence of the side holes 159 when the toilet WC is moved towards the wall P.

At this point, by screwing the screws 113 into the threaded holes 111 by means of a wrench inserted through the holes 159, a thrust of the tips of the screws 113 is generated on the inclined parts of the flarings 131A. In the enlargement of Fig. 6I the screw 113 has been screwed inside the hole 111 with respect to the position shown in Fig. 6G. Thanks to the inclination of the flarings 131A the thrust of the screw 113 transforms into a traction force onto the respective pins 131 and therefore in a thrust of the toilet WC against the wall P, as known to those skilled in the art.

It is clearly apparent that with the above descri bed configuration of the sleeve 1 in two parts (elements 1a, 1b) it is possible preliminarily to anchor the sleeve 1 in the respective niche 151, by telescopically adapting the length of the sleeve 1 to the width of the niche 151. In this way the sleeve 1 can adapt to bathroom fixtures of different shape and may also compensate for the construction tolerances typical of the bathroom fixture made of ceramic, tolerances that vary significantly with the wear of the molds and that can result into changes, also of several millimeters, in the width of the niche 151 among different items of the same bathroom fixture.

The particular shape of the sleeve 1 described with reference to Figs. 1 to 5 allows to have some particular advantages, in addition to the possibility of being adapted to the size of the niche 151. In particular, the presence of a female thread 107 allows to use the described kit, and more precisely the element 1a of the sleeve 1 and the screw 113, even with other fixing systems for fixing to the bathroom fixture, for example systems of the type descri bed in DE 202009014171.

T he shape of the element 1 b, with the threaded collar 115 projecting towards the element 1a, further allows to introduce the anchoring pin 131 for a great extent inside the sleeve 1, thus providing for a particularly safe anchoring to the wall P.

A second embodiment of the sleeve 1 is shown in Figs. 7 to 11. Equal or equivalent parts to those illustrated in Figs. 1 to 5 and described above are indicated with the same reference numbers and will not be descri bed again. Here below the main differences between the two embodiments will be highlighted.

The sleeve 1 of Figs. 7 to 11 mainly differs from the sleeve of Figs. 1 to 5 in the different shape of the element 1b. This has substantially the shape of a small cylinder with a wall externally threaded with a male thread 117 formed on a wall 115 functionally corresponding to the cylindrical collar 115 of Figs. 1 to 5.

The outer surface of the wall 121 of the element 1b may be provided with reliefs 121A increasing the friction against the wall 155 of the niche 151. Similar reliefs 121A may be also provided in the embodiment of Figs. 1 to 5.

The element 1a has a single hollow body 103 and is not provided with the hollow body 105. The female thread 102 extends entirely inside the hollow body 103.

T he method of use of the sleeve of Figs. 7 to 11 is the same as described with reference to Figs. 6A-6I and will not be described again.

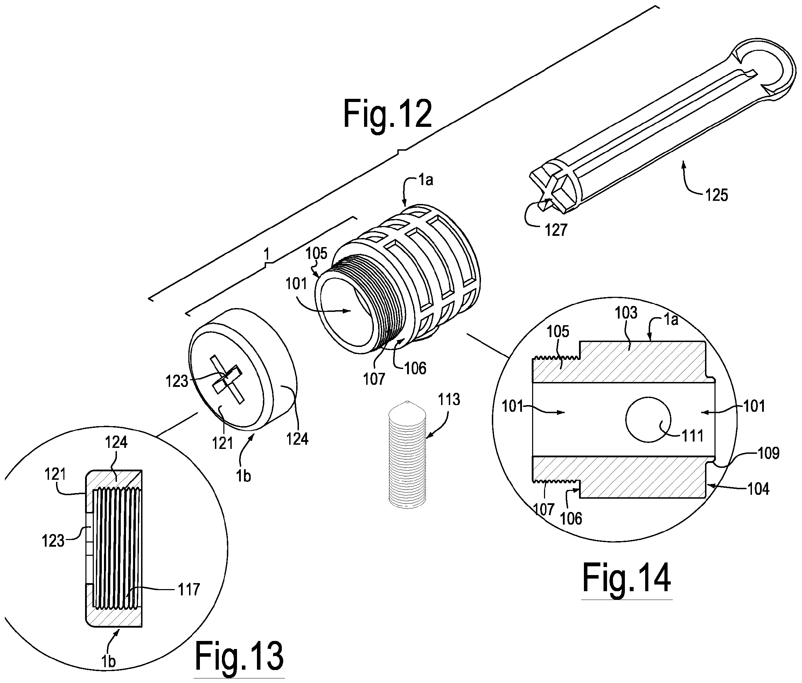

In Figs. 12 to 16 a third embodiment of the sleeve 1 is shown. Equal or equivalent parts to those illustrated in Figs. 1 to 5 and described above are indicated with the same reference numbers and will not be described again. Below the main differences between the two embodiments will be highlighted.

The sleeve 1 of Figs. 12 to 16 differs from the sleeve of Figs. 1 to 5 mainly for the different shape of the element 1b. This latter substantially has the shape of a small cylinder with a wall or outer collar 124 with a thread 117, having the same function as the thread 117 descri bed in the previous exemplary embodiments, but that in this case is a female thread.

The female thread 117 engages in screw-like fashion with a male thread 107 provided on the hollow body 105 projecting from the hollow body 103 of the element 1a of the sleeve 1.

The operation of the sleeve of Figs. 12 to 16 is substantially the same as that descri bed with reference to Figs. 6A to 6I.

Whilst the invention has been described above with specific reference to non-limiting embodiments, the scope of the invention is defined by the attached claims.

## Claims

1. Kit for mounting wall-hung objects, in particular wall-hung bathroom fixtures, comprising a sleeve (1), having:
a first element (1a) with a through axial cavity (101);
a second element (1b) that can coaxially engage the first element (1a);
a screw coupling (107, 117) between the first element (1a) and the second element (1b), with a first thread (107) at a first end of the first element (1a) and a second thread (117) on the second element (1b), that can engage the first thread (107); the screw coupling being so configured that when the first thread (107) and the second thread (117) engage each other, the reciprocal rotation between the first element (1a) and the second element (1b) causes a change in the axial length of the sleeve (1);
wherein the second element (1b) of the sleeve (1) comprises a connection means (123) so configured and arranged to be engaged by means of a maneuvering tool (125) through the through axial cavity (101), to rotate the second element (1b) with respect to the first element (1) so as to cause an adjustment in the axial length of the sleeve (1).

2. The kit of claim 1, wherein the first thread (107) is a female thread and the second thread (117) is a male thread, and wherein the female thread (107) is provided in an inner surface of the through axial cavity (101) of the first element (1a) of the sleeve (1).

3. The kit of claim 1 or 2, wherein the first element (1a) of the sleeve (1) comprises a first hollow body (103) and a second hollow body (105) integral and substantially coaxial with each other.

4. The kit of claim 3, wherein the first thread (107) is provided on the second hollow body (105) of the first element (1a) of the sleeve (1), projecting from an end (106) of the first hollow body (103).

5. The kit of claim 3, wherein first thread (107) is a male thread and
the second thread (117) is a female thread, and wherein the first thread (107) is provided on the second hollow body (105) of the first element (1a) of the sleeve (1).

6. The kit of one or more of the previous claims, wherein the second element (1b) of the sleeve (1) has a body with a threaded collar (115; 124) and a wall (121) transverse to the collar, the wall forming the connection means (123) for engaging the maneuvering tool (125).

7. The kit of one or more of the previous claims, further comprising an anchoring pin (131) that can be inserted into said through axial cavity (101) of the sleeve (1), the anchoring pin (131) being insertable into the through axial cavity (103) from and end of the first element (1a) opposite to the second element (1b).

8. The kit of one or more of the previous claims, wherein the first element (1a) of the sleeve (1) comprises a substantially radial through hole (111), and a constraint member (113) insertable into said through hole (111).

9. The kit of claim 8, wherein the constraint member (113) comprises a screw, and wherein the through hole (111) is threaded to engage said screw (113).

10. The kit of claim 8 or 9, wherein the anchoring pin (131) comprises a flaring (131A) elongated according to an axial direction of the anchoring pin (131) and of the sleeve (1), co-acting with the constraint member (113), to generate on the anchoring pin (131) a traction force by inserting the constraint member (113) into the through hole (111).

11. The kit of one or more of the previous claims, wherein the first element (1a) comprises a centering ring (109) substantially coaxial with the through axial cavity (101) and provided on an end surface opposite with respect to the second element (1b).

12. The kit of one or more of the previous claims, further comprising a maneuvering tool (125).

13. System comprising an object to be hung, in particular a bathroom fixture, for example a WC, and at least one kit of one or more of the previous claims.

14. Method for fixing an object to be hung, in particular a bathroom fixture, to a bearing structure, said object to be hung comprising at least one niche (151) that can be accessed from the outside of the object and is delimited by a first wall (153) and by a second wall (155) that are opposite to each other, the first wall (153) having a through opening (157); the method comprising the following steps:
- inserting, into the niche (151) a sleeve of the kit of one or more of the previous claims, so that the first element (1a) of the sleeve is directed towards the first wall (153) of the object to be hung and the second element (1b) of the sleeve is directed towards the second wall (155) of the object to be hung,
- aligning the through axial cavity (101) of the sleeve with the through opening(157) of the first wall (153) of the object to be hung;
- inserting a maneuvering tool (125) through the through opening (157) of the first wall (153) and through the through axial cavity (101) of the sleeve, up to engage the second element (1b) of the sleeve with the maneuvering tool (125);
- through said maneuvering tool (125), rotating the second element (1b) of the sleeve with respect to the first element (1a) of the sleeve, so as axially to elongate the sleeve up to stop it in the niche (151) through interference.

15. The method of claim 14, further comprising the step of removing the maneuvering tool (125) from the through opening.

16. The method of claim 14 or 15, further comprising the following steps:
- mounting the anchoring pin (131) on a bar anchored to a bearing structure where the object to be hung shall be mounted;
- moving the object to be hung towards the bearing structure, inserting the anchoring pin (131) through the through opening (157) into the first wall (153) of the object to be hung and into the through axial cavity (101) of the sleeve;
- generating a traction force on the anchoring pin (131) in order to press the object to be hung against the bearing structure.

17. The method of claim 16, wherein the step of generating a traction force on the anchoring pin (131) comprises the step of inserting a constraint member (113) through the substantially adial through hole (111) of the sleeve, said constraint member (113) co-acting with a flaring (131A) provided in the anchoring pin (131) and extending according to the axial direction of the anchoring pin (131), a radial thrust of the constraint member (113) generating a thrust onto the object to be hung in axial direction with respect to the anchoring pin (131) and against the bearing structure.

## Patentansprüche

1. Bausatz zur Montage von wandbefestigten Objekten, insbesondere wandbefestigten Badarmaturen mit einer Hülse (1) mit:
einem ersten Element (1a) mit einem axial durchgängigen Hohlraum (101),
einem zweiten Element (1b), das koaxial mit dem ersten Element (1a) in Eingriff kommen kann,
einer Schraubverbindungen (107, 117) zwischen dem ersten Element (1a) und dem zweiten Element (1b), mit einem ersten Gewinde (107) an einem ersten Ende des ersten Elements und
einer zweiten Gewinde (117) an dem zweiten Element (1b), das mit dem ersten Gewinde (107) in Eingriff kommen kann, wobei die Schraubverbindungen so ausgebildet ist, dass, wenn das erste Gewinde (107) und das zweite Gewinde (117) mit ein anderer in Eingriff kommen, die hin und her gehende Drehung zwischen dem ersten Element (1a) und dem zweiten Element (1b) eine Änderung der axialen Länge der Hülse (1) bewirkt,
wobei das zweite Element (1b) der Hülse (1) eine Verbindungseinrichtung (123) aufweist, die so ausgebildet und angeordnet ist, um mittels eines Handhabungswerkzeugs (125) durch den axial durchgängigen Hohlraum (101) in Eingriff zu kommen, um das zweite Element (1b) mit Bezug auf das erste Element (1a) zu drehen, um eine Einstellung in der axialen Länge der Hülse (1) zu bewirken.

2. Bausatz nach Anspruch 1, wobei das erste Gewinde (107) ein Innengewinde ist und das zweite Gewinde (117) ein Außengewinde ist und wobei das Innengewinde (107) an der inneren Fläche des axial durchgängigen Hohlraums (101) des ersten Elements (1a) der Hülse (1) vorgesehen ist.

3. Bausatz nach Anspruch 1 oder 2, wobei das erste Element (1a) der Hülse (1) einen ersten Hohlkörper (103) und einen zweiten Hohlkörper (105) aufweist, die einstückig und im Wesentlichen koaxial zueinander sind.

4. Bausatz nach Anspruch 3, wobei das erste Gewinde (107) an dem zweiten Hohlkörper (105) des ersten Elements (1a) der Hülse (1) vorgesehen ist, das von einem Ende (106) des ersten Hohlkörpers (103) vorsteht.

5. Bausatz nach Anspruch 3, wobei das erste Gewinde (107) ein Außengewinde ist und das zweite Gewinde (117) ein Innengewinde ist und wobei das erste Gewinde (107) an dem zweiten Hohlkörper (105) des ersten Elements (1a) der Hülse (1) vorgesehen ist.

6. Bausatz nach einem oder mehreren der vorstehenden Ansprüche, wobei das zweite Element (1b) der Hülse (1) einen Körper mit einem Gewindekragen (115; 124) und eine Wandung (121) aufweist, die quer zu dem Kragen ist, wobei die Wandung die Verbindungseinrichtung (123) zum Eingriff des Handhabungswerkzeugs (125) bildet.

7. Bausatz nach einem oder mehreren der vorstehenden Ansprüche mit ferner einem Ankerstift (131), der durch den axial durchgängigen Hohlraum (101) der Hülse (1) eingebracht werden kann, wobei der Ankerstift (131) in den axial durchgängigen Hohlraum (103) von einem Ende des ersten Elements (1a) gegenüber dem zweiten Element (1b) eingebracht werden kann.

8. Bausatz nach einem oder mehreren der vorstehenden Ansprüche, wobei das erste Element (1a) der Hülse (1) ein im Wesentlichen radiales Durchgangsloch (111) und ein Sperrelement (113) aufweist, das in das Durchgangsloch (111) eingebracht werden kann.

9. Bausatz nach Anspruch 8, wobei das Sperrelement (113) eine Schraube aufweist und wobei das Durchgangsloch (111) mit einem Gewinde versehen ist, um mit der Schraube (113) in Eingriff zu kommen.

10. Bausatz nach Anspruch 8 oder 9, wobei der Ankerstift (131) eine Abflachung (131A) aufweist, die sich entsprechend einer Axialrichtung des Ankerstifts und der Hülse (1) erstreckt, die mit dem Sperrelement (113) zusammenwirkt, um auf dem Ankerstift (131) eine Zugkraft durch Einbringung des Sperrelements (113) in das Durchgangsloch (111) zu erzeugen.

11. Bausatz nach einem oder mehreren der vorstehenden Ansprüche, wobei das erste Element (1a) einen Zentrierring (109) aufweist, der im Wesentlichen koaxial mit dem axial durchgängigen Hohlraum (101) ist und an einer Endfläche gegenüber mit Bezug auf das zweite Element (1b) vorgesehen ist.

12. Bausatz nach einem oder mehreren der vorstehenden Ansprüche mit ferner einem Handhabungswerkzeug (125).

13. System mit einem zu befestigenden Objekt, insbesondere einer Badarmatur, beispielsweise eines WC, und mindestens einem Bausatz nach einem oder mehreren der vorstehenden Ansprüche.

14. Verfahren zur Fixierung eines Objekts, insbesondere einer Badarmatur, das an einer Lagerstruktur zu befestigen ist, wobei das zu befestigende Objekt mindestens eine Auskehlung aufweist, auf die von außen des Objekts zugegriffen werden kann und die durch eine erste Wandung (153) und durch eine zweite Wandung (155) begrenzt ist, die einander gegenüberliegen, wobei die erste Wandung eine Durchgangsöffnung (157) aufweist, wobei das Verfahren die folgenden Schritte aufweist:
- Einbringen, in die Auskehlung (151), einer Hülse des Bausatzes nach einem oder mehreren der vorstehenden Ansprüche, sodass das erste Element (1a) der Hülse zu der ersten Wandung (153) des zu befestigenden Objekts gerichtet ist und das zweite Element (1b) der Hülse zu der zweiten Wandung (155) des zu befestigenden Objekts gerichtet ist,
- Ausrichten des axial durchgängigen Hohlraums (101) der Hülse mit der Durchgangsöffnung (157) der ersten Wandung (153) des zu befestigenden Objekts,
- Einbringen eines Handhabungswerkzeugs (125) durch die Durchgangsöffnung (157) der ersten Wandung (153) und durch den axial durchgängigen Hohlraum (101) der Hülse, um an dem zweiten Element (1b) der Hülse mit dem Handhabungswerkzeug (125 anzugreifen,
- Drehen des zweiten Elements (1b) mit Bezug auf das erste Element (1a) der Hülse mit dem Handhabungswerkzeug (125) zur axialen Verlängerung der Hülse bis zu einem Anhalten in der Auskehlung (151) durch Kollision.

15. Verfahren nach Anspruch 14 mit ferner dem Schritt der Entfernung des Handhabungswerkzeugs (125) aus der Durchgangsöffnung.

16. Verfahren nach Anspruch 14 oder 15 mit ferner den folgenden Schritten:
- Montage des Ankerstifts (131) an einer Leiste, die mit einer Lagerstruktur verankert ist, an der das zu befestigende Objekt anzubringen ist,
- Bewegen des zu befestigenden Objekts zu der Lagerstruktur, Einbringen des Ankerstifts (131) durch die Durchgangsöffnung in der ersten Wandung (153) des zu befestigenden Objekts und in den axial durchgängigen Hohlraum (101) der Hülse,
- Erzeugen einer Zugkraft an dem Ankerstift (131), um das zu befestigende Objekt gegen die Lagerstruktur zu drücken.

17. Verfahren nach Anspruch 16, wobei der Schritt der Erzeugung einer Zugkraft auf den Ankerstift (131) den Schritt des Einbringens eines Sperrelements (113) durch das im Wesentlichen radiale Durchgangsloch (111) der Hülse umfasst, wobei das Sperrelement (113) mit einer Abflachung (131A) zusammenwirkt, die in dem Ankerstift (131) vorgesehen ist und sich entsprechend der Axialrichtung des Ankerstift (131) erstreckt wobei ein radialer Schub des Sperrelements (113) einen Druck auf das zu befestigende Objekt in Axialrichtung mit Bezug auf den Ankerstift (131) und gegen die Lagerstruktur erzeugt.

## Revendications

1. Kit pour le montage d'objets suspendus, en particulier de sanitaires suspendus, comprenant un manchon (1), comportant :
un premier élément (1a) avec une cavité axiale traversante (101) ;
un deuxième élément (1b) qui peut venir en prise coaxialement avec le premier élément (1a) ;
un couplage à vis (107, 117) entre le premier élément (1a) et le deuxième élément (1b), avec un premier filetage (107) à une première extrémité du premier élément (1a) et un deuxième filetage (117) sur le deuxième élément (1b) qui peut venir en prise avec le premier filetage (107) ; le couplage par vis étant configuré de telle sorte que lorsque le premier filetage (107) est le deuxième filetage (117) viennent en prise l'un avec l'autre, la rotation réciproque entre le premier élément (1a) et le deuxième élément (1b) provoque un changement dans la longueur axiale du manchon (1) ;
dans lequel le deuxième élément (1b) du manchon (1) comprend un moyen de connexion (123) configuré de telle sorte et agencé pour venir en prise au moyen d'un outil de manœuvre (125) à travers la cavité axiale traversante (101), pour faire tourner le deuxième élément (1b) par rapport au premier élément (1a) de façon à effectuer un réglage de la longueur axiale du manchon (1).

2. Le kit selon la revendication 1, dans lequel le premier filetage (107) est un taraudage et le deuxième filetage (117) est un filetage extérieur, et dans lequel le taraudage (107) est prévu sur une surface interne de la cavité axiale traversante (101) du premier élément (1a) du manchon (1).

3. Le kit selon la revendication 1 ou 2, dans lequel le premier élément (1a) du manchon (1) comprend un premier corps creux (103) et un deuxième corps creux (105) d'un seul tenant et sensiblement coaxiaux l'un avec l'autre.

4. Le kit selon la revendication 3, dans lequel le premier filetage (107) est prévu sur le deuxième corps creux (105) du premier élément (1a) du manchon (1), faisant saillie par rapport à une extrémité (106) du premier corps creux (103).

5. Le kit selon la revendication 3, dans lequel le premier filetage (107) est un filetage extérieur et le deuxième filetage (117) est un taraudage, et dans lequel le premier filetage (107) est prévu sur le deuxième corps creux (105) du premier élément (1a) du manchon (1).

6. Le kit selon l'une ou plusieurs des revendications précédentes, dans lequel le deuxième élément (1b) du manchon (1) a un corps avec un col fileté (115 ; 124) et une paroi (121) perpendiculaire au col, la paroi formant le moyen de connexion (123) pour venir en prise avec l'outil de manœuvre (125).

7. Le kit selon l'une ou plusieurs des revendications précédentes, comprenant en outre un tige de fixation (131) qui peut être introduite dans ladite cavité axiale traversante (101) du manchon (1), la tige de fixation (131) pouvant être introduite dans la cavité axiale traversante (103) depuis une extrémité du premier élément (1a) opposée au deuxième élément (1b).

8. Le kit selon l'une ou plusieurs des revendications précédentes, dans lequel le premier élément (1a) du manchon (1) comprend un trou traversant sensiblement radial (111) et un organe de contrainte (113) pouvant être introduit dans ledit trou traversant (111).

9. Le kit selon la revendication 8, dans lequel l'organe de contrainte (113) comprend une vis et dans lequel le trou traversant (111) est fileté pour venir en prise avec ladite vis (113).

10. Le kit selon la revendication 8 ou 9, dans lequel la tige de fixation (131) comprend un évidement (131A) allongé selon une direction axiale de la tige de fixation (131) et du manchon (1), coopérant avec l'organe de contrainte (113), pour créer sur la tige de fixation (131) une force de traction en introduisant l'organe de contrainte (113) dans le trou traversant (111).

11. Le kit selon l'une ou plusieurs des revendications précédentes, dans lequel le premier élément (1a) comprend un anneau de centrage (109) sensiblement coaxial avec la cavité axiale traversante (101) et prévu sur une surface d'extrémité opposée par rapport au deuxième élément (1b).

12. Le kit selon l'une ou plusieurs des revendications précédentes, comprenant en outre un outil de manœuvre (125).

13. Système comprenant un objet à suspendre, en particulier un sanitaire suspendu, par exemple un WC, et au moins un kit selon l'une ou plusieurs des revendications précédentes.

14. Méthode de fixation d'un objet à suspendre, en particulier un sanitaire pour salle de bains, à une structure de support, ledit objet à suspendre comprenant au moins un logement (151) auquel il est possible d'accéder depuis l'extérieur de l'objet et qui est délimité par une première paroi (153) et une deuxième paroi (155) qui se font face, la première paroi (153) ayant une ouverture traversante (157) ;
la méthode comprenant les étapes suivantes consistant à :
- introduire, dans le logement (151), un manchon du kit selon l'une ou plusieurs des revendications précédentes, de sorte que le premier élément (1a) du manchon soit dirigé vers la première paroi (153) de l'objet à suspendre et que le deuxième élément (1b) du manchon soit dirigé vers la deuxième paroi (155) de l'objet à suspendre,
- aligner la cavité axiale traversante (101) du manchon avec l'ouverture traversante (157) de la première paroi (153) de l'objet à suspendre ;
- introduire un outil de manoeuvre (125) à travers l'ouverture traversante (157) de la première paroi (153) et à travers la cavité axiale traversante (101) du manchon, jusqu'à venir en prise avec le deuxième élément (1b) du manchon avec l'outil de manoeuvre (125) ;
- avec l'outil de manœuvre (125), faire tourner le deuxième élément (1b) du manchon par rapport au premier élément (1a) du manchon, de manière à allonger axialement le manchon jusqu'à son arrêt dans le logement (151) par interférence.

15. La méthode selon la revendication 14, comprenant en outre l'étape de retrait de l'outil de manœuvre (125) de l'ouverture traversante.

16. Le procédé selon la revendication 14 ou 15, comprenant en outre les étapes suivantes :
- monter la tige de fixation (131) sur une barre fixée à une structure de support où l'objet à suspendre doit être monté ;
- déplacer l'objet à suspendre vers la structure de support, introduire la tige de fixation (131) à travers l'ouverture traversante (157) dans la première paroi (153) de l'objet à suspendre et dans la cavité axiale traversante (101) du manchon ;
- créer une force de traction sur la tige de fixation (131) afin de presser l'objet à suspendre contre la structure de support.

17. La méthode selon la revendication 16, dans laquelle l'étape de création d'une force de traction sur la tige de fixation (131) comprend l'étape d'introduction d'un organe de contrainte (113) à travers le trou traversant sensiblement radial (111) du manchon, ledit organe de contrainte (113) coopérant avec un évidement (131A) prévu dans la tige de fixation (131) et s'étendant suivant la direction axiale de la tige de fixation (131), une poussée radiale de l'organe de contrainte (113) créant une poussée sur l'objet à suspendre dans une direction axiale par rapport à la tige de fixation (131) et contre la structure de support.
